# EUROPEAN PATENT APPLICATION

(11) **EP 4 480 677 A1**
(43) Date of publication of application: **25.12.2024**
(21) Application number: 23181179.5
(22) Date of filing: 23.06.2023
(51) Int. Cl.: B29C 64/106, B29C 64/25, B29C 64/364, B29C 64/393, B33Y 30/00, B33Y 40/00, B33Y 50/02

(54) **BIOMEDIC LAMINAR FLOW BOX**

(71) Applicant: Technická Univerzita V Kosiciach, 04200 Kosice-Sever (SK)
(72) Inventor: SCHNITZER, Marek, Rozhanovce (SK); ZIVCAK, Jozef, Presov (SK); HUDAK, Radovan, Kosice (SK); FERENCIK, Norbert, Kysta (SK)

(57) **Abstract**

Construction of the invention is designed for an extrusion system meeting the requirements of filament production. Control of the compact laminar box system, made of components designed specifically for this kind of laminar box is provided through the open-source Adruino UNO platform and the Adruino IDE program via a computer. The compact laminar box system, made of components designed specifically for this type of laminar box in provides ideal conditions in the production process, such as the optimal ambient temperature, which according to standards should range from 18 to 19 degrees Celsius, for the use of fan units.

## Description

### Field of invention

The invention of the laminar box is designed to optimize the production process of biomedical filaments. Its solution affects the process and overall laboratory conditions.

### Background to the invention

The use of laminar boxes is wide-ranging. Laminar boxes are mainly used in optical, laser, semiconductor and electronic technology applications. The construction of the laminar box is designed to prevent contact with the external environment and to ensure the protection of the researchers as well as the researched material. Most laminar boxes are equipped with a HEPA filter, through which the air is sucked in and blown out in a very smooth flow towards the user and out. Another important function is ensuring the protection of the product (workspace) from particles. The picture shows an example of a laminar box, which is equipped with two filters, a fan, an air inlet and an air outlet. The construction of this laminar box is simple and practical with transparent walls.

The mentioned technical solutions and current state of the art are also based on these professional and scientific articles:
[1] ZEERATKAR, M., DE TULIO, M., PERCOCO, G.: Fused Filament Fabrication (FFF) for Manufacturing of Microfluidic Micromixers: An Experimental Study on the Effect of Process Variables in Printed Microfluidic Micromixers, Micromachines, Vol. 12, No. 8, pp. 1-13, 2021. https://doi.org/10.3390/mi12080858
[2] HASEGAWA, K., MATSUMOTO, M., HOSOKA W A, K., MAEDA, M.: Detection of methylated DNA on a power-free microfluidic chip with laminar flow-assisted dendritic amplification, Analytical Sciences, Vol. 32, No. 6, pp. 603-606, 2016. https://doi.org/10.2116/analsci.32.603
[3] OU, J., MOSS, G.R., ROTHSTEIN, J.P.: Enhanced mixing in laminar flows using ultrahydrophobic surfaces, Physical Review E, Vol. 76, No. 1, pp. 1-10, 2007.
[4] AGHAEI ARAEI, A., TOWHA T A, I.: Impact and cyclic shaking on loose sand properties in laminar box using gap sensors, Soil Dynamics and Earthquake Engineering, Vol. 66, No. November, pp. 401-414, 2014.
[5] UENG, T.S., CHEN, CH., PENG, L.H., LI, W.C.: Large-scale shear box soil liquefaction testing on shaking table (III) - preparation of large sand specimen and preliminary shaking table test, In: Proceedings of the National Center for Research on Earthquake Engineering, Taiwan, 2006.
[6] KHABBAZIAN, M., KALIAKIN, V.N., MEEHAN, C.L.: Numerical study of the effect of geosynthetic encasement on the behaviour of granular columns, Geosynthetics International, Vol. 17, No. 3, pp. 132- 143, 2010.

### Summary of the invention

Filament production is a demanding process, which we decided to optimize by designing a laminar box. From a number of proposals, we decided to choose a purpose-built design for the future structure of the laminar box. The production of filaments takes place on a filamentmaker, which must be placed in a laminar box. The laminar box then provides ideal conditions in the production process, such as the optimal ambient temperature, which according to standards should be between 18 and 19 degrees Celsius. Furthermore, this laminar box is equipped with a thermometer, a hygrometer and a control unit. The laminar box represents a significant advance in the production and optimization of conditions for the production of biomedical filaments. Its design is unique. A laminar box can also be defined as a laboratory station intended for work in dust-free, sterile conditions. Laminar boxes can be equipped with UV light, which has the task of sterilizing the working environment of the laminar box. The unit with UV light is equipped with a timer and a sensor that prevents exposure to UV radiation when the door is lifted. As part of improving the production of biomedical filaments, we at the Department of Biomedical Engineering and Measurement started our own design and production of a laminar box called Biomedic laminar box. We made the model of the laminar box in the 3D modeling program SketchUp. The laminar box itself stands out with its simple and practical design. Compact dimensions ensure trouble-free handling during the operation of the filamentmaker in the production process. A sterile environment is ensured by thorough isolation. It is made of aluminum profiles and plexiglass with a thorough connection. Air recovery in the laminar box is provided by twelve fans that supply and remove air. The interface of the 3D modeling program SketchUp perfectly served its purpose in the design of this unique laminar box. The laminar box is equipped with a thermometer, a hygrometer and a control unit. Control is ensured through the Adruino UNO open-source platform and the Adruino IDE program via a computer. The platform is located in an electrical protective chamber attached to the wall of the laminar box. The table shows more detailed technical specifications and dimensions of the laminar box.

| Laminar box marking | Biomedic laminar box |
|---|---|
| Width | 1000 (mm) |
| Height | 1000 (mm) |
| Depth | 500 (mm) |
| Air intake | 6 power fans |
| Air outlet | 6 power fans |
| Optimum temperature of the working environment | 18-19°C |

### Brief description of the drawings

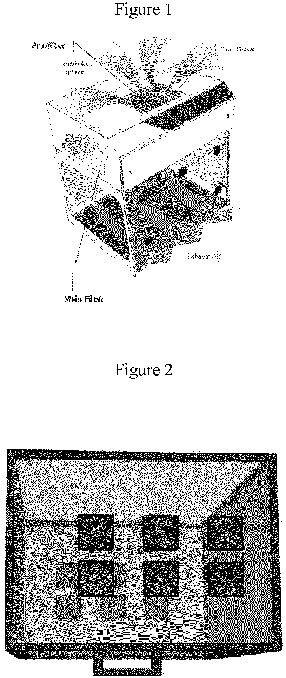

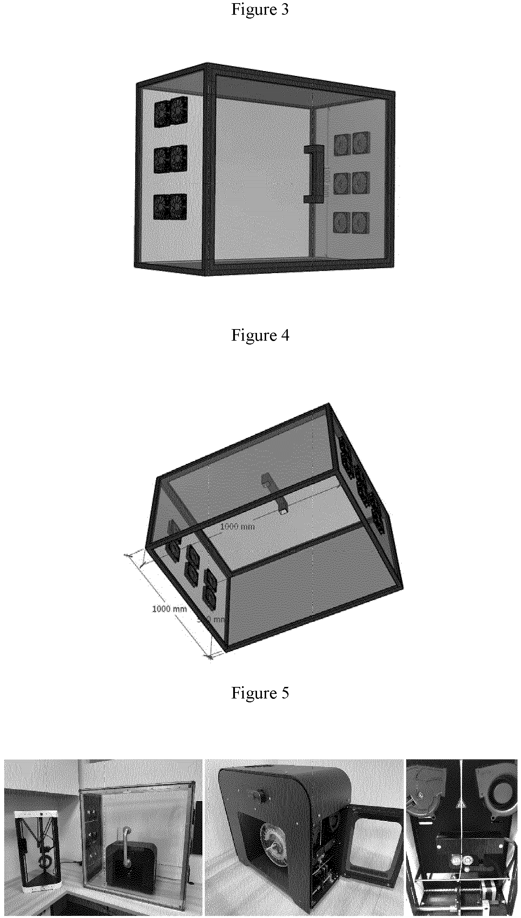

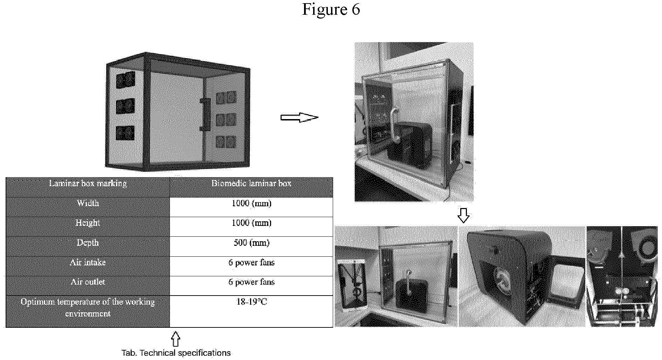

Fig. 1 shows an example of a laminar box. Fig. 2 shows side view of the Biomedic laminar box design. Fig. 3 shows front view of the Biomedic laminar box design. Fig. 4 shows dimensions of the laminar box. Fig. 5 shows use of the Biomedic laminar box in the production of filaments. Fig. 6 shows technical photo documentation.

### Detailed description

The construction of the laminar box has a benefit in the field of material extrusion with real solutions. The production of filaments is coming more and more to the fore. Therefore, the production conditions cannot be neglected. The future of filament use lies in the production of biocompatible implants through additive technology. This report describes the technical specifications that indicate success in the manufacture and use of a laminar box.

### Possible technical improvements

To improve the quality of the environment, the quality and safety of work, it is advisable to place a CO2 sensor in the laminar box, which effectively detects harmful gases. The sensor measuring 10x 3.5 cm with a signaling volume of 85 dB protects against carbon monoxide and is equipped with a blue LCD display for the level of the CO2 value.

Another technical improvement is a circular HEPA filter with the type name Adler AD7961, located on each fan separately. In the complex system of the laminar box, this filter should have the task of getting rid of harmful parts from the incoming air as well as the exhaust air.

The germicidal lamp Midea UV MDL-UVGL38WUVC would eliminate molds, viruses, bacteria, fungi and would be able to sterilize a space of 30-40m2. Technical specifications: voltage 220V, dimensions 190×450mm.

The lighting of the working space would be realized by LED panel MARS SLIM - 120cm - 36W - 230V - 3600Lm - with cold white for better illumination of components in the process of biomedical filament production.

For the safety of handling, it is important to complete the laminar box with holes for hands with working gloves for laboratory researchers. The holes would be located at the front of the laminar box.

The last technical improvement is the placement of the emergency button on the upper wall of the laminar box. This button would completely shut down the production process. This technical modification has a significant impact on improving safety at work.

## Claims

1. A compact laminar box system, from components designed specifically for this type of laminar box, **characterized in that** its construction is designed for an extrusion system meeting the requirements of filament production.

2. The compact laminar box system, made of components designed specifically for this kind of laminar box in accordance with claim 1 **characterized in that** the control is provided through the open-source Adruino UNO platform and the Adruino IDE program via a computer.

3. The compact laminar box system, made of components designed specifically for this type of laminar box in accordance with claim 1 **characterized in that** it provides ideal conditions in the production process, such as the optimal ambient temperature, which according to standards should range from 18 to 19 degrees Celsius, for the use of fan units.

4. The compact laminar box system, made of components designed specifically for this type of laminar box in accordance with claim 1 **characterized in that** the laminar box model was designed in the 3D modeling program SketchUp in such a way that it stands out with its simple and practical design, compact dimensions ensuring trouble-free handling when operating the filamentmaker in production process.

5. The compact laminar box system, made of components designed specifically for this type of laminar box in accordance with claim 1 **characterized in that** air recovery in the laminar box is ensured by twelve fans that supply and remove air.

6. The compact laminar box system, from components designed specifically for this type of laminar box in accordance with claim 1 **characterized in that** it is equipped with a thermometer, a hygrometer for automatic optimization of the process.

7. The compact laminar box system, made of components designed specifically for this type of laminar box in accordance with claim 1 **characterized in that** it is prepared for the installation of additional elements related to the optimization of the production process.

8. A compact laminar box system, from components designed specifically for this type of laminar box in accordance with claim 1 **characterized in that** its design allows the configuration and change of preparations intended for the biomedical filament production process.
